# EUROPÄISCHE PATENTSCHRIFT

(11) **EP 3 775 536 B1**
(45) Veröffentlichungstag und Bekanntmachung des Hinweises auf die Patenterteilung: **26.08.2026**
(21) Anmeldenummer: 19735214.9
(22) Anmeldetag: 15.04.2019
(51) Int. Cl.: F03D 7/04

(54) **WINDENERGIEANLAGE, WINDPARK SOWIE VERFAHREN ZUM REGELN EINER WINDENERGIEANLAGE UND EINES WINDPARKS**
WIND TURBINE, WIND POWER PLANT AND METHOD FOR CONTROLLING A WIND TURBINE AND A WIND POWER PLANT
ÉOLIENNE, PARC ÉOLIEN ET PROCÉDÉ DE CONTRÔLE D'UNE ÉOLIENNE ET D'UN PARC ÉOLIEN

(30) Priorität: 13.04.2018 DE 102018108858
(43) Veröffentlichungstag der Anmeldung: 17.02.2021
(73) Patentinhaber: Wobben Properties GmbH, 26607 Aurich (DE)
(72) Erfinder: MESSING, Ralf, 26605 Aurich (DE); DIETZ, Dennis, 28209 Bremen (DE); HAVLICEK, Paul, 48161 Münster (DE)
(74) Vertreter: Eisenführ Speiser
(86) Internationale Anmeldenummer: PCT/EP2019/059618
(87) Internationale Veröffentlichungsnummer: WO 2019/197680

(56) Entgegenhaltungen:
- EP-A2- 2 025 929
- EP-A2- 2 063 108
- EP-A2- 2 674 617
- WO-A1-2017/042594
- US-A1- 2011 142 619
- US-A1- 2013 103 202
- US-A1- 2014 003 939

## Beschreibung

Die vorliegende Erfindung betrifft eine Windenergieanlage, einen Windpark sowie ein Verfahren zum Regeln einer Windenergieanlage und eines Windparks. Die vorliegende Erfindung betrifft insbesondere eine Windenergieanlage mit einer Nachlaufregelung, die dazu eingerichtet ist, die Windenergieanlage abhängig von an einer weiteren Windenergieanlage verursachten Nachlaufeffekten zu regeln.

Eine grundsätzliche Regelung von Windenergieanlagen in Abhängigkeit von Nachlaufeffekten, die von anderen in der Umgebung angeordneten Windenergieanlagen verursacht werden, ist bekannt. Hierzu wird herkömmlich für eine bestimmte Windrichtung vorgegeben, ob es zu nachlaufbedingten Auswirkungen auf die in Windrichtung hinten angeordneten Anlagen kommt und, falls ja, die Steuerung einer oder mehrerer Windenergieanlagen angepasst.

So ist es beispielsweise aus WO 2004/111446 bekannt, eine Windenergieanlage, die in Umgebung einer anderen Windenergieanlage steht, gerade dann abzuregeln, wenn sich die andere Windenergieanlage leeseitig zu er dann abgeregelten Windenergieanlage befindet. Hierbei werden tabellierte Zusammenhänge insbesondere aus Windrichtung und Nachlaufwirkung herangezogen, die tatsächliche Beeinträchtigungen an der anderen Windenergieanlage unberücksichtigt lassen.

Das Deutsche Patent- und Markenamt hat in der Prioritätsanmeldung zur vorliegenden Anmeldung folgenden Stand der Technik recherchiert: DE 10 2010 016 292 A1, US 2017/0350369 A1, CN 206 592 245 U, US 2014/0003939 A1, EP 2 696 067 A2, US 2009/0099702 A1, DE 10 2016 212 364 A1, GB 2 481 461 A, GB 2 476 507 A, US 2013/0255363 A1, und WO 2008/041066 A1.

EP 2 674 617 A2 beschreibt ein Verfahren zum Betrieb einer Windkraftanlage. Das Verfahren umfasst die Bestimmung einer Windbedingung, Bestimmen der für die Windbedingung erwarteten azimutalen Positionen eines rotierenden Windrotors der Windturbine, und für die Windbedingung das Bestimmen der gewünschten azimutalen Positionen des rotierenden Windrotors so dass mindestens eines von einer Lastbalance des rotierenden Windrotors und eine Leistungsaufnahme des rotierenden Windrotors im Vergleich zu den erwarteten azimutalen Positionen verbessert wird.

Vor diesem Hintergrund war es eine Aufgabe der vorliegenden Erfindung, eine verbesserte Nachlaufregelung für eine Windenergieanlage, aber auch einen verbesserten Windpark sowie ein verbessertes Verfahren zum Regeln einer Windenergieanlage und eines Windparks anzugeben.

Erfindungsgemäß wird die Aufgabe durch eine Windenergieanlage nach Anspruch 1 sowie durch ein Verfahren zum Regeln einer Windenergieanlage nach Anspruch 9 gelöst.

Erfindungsgemäß wird somit vorgeschlagen, keine vorberechneten oder tabellierten Auswirkungen von Nachlaufeffekten, die in der Windenergieanlage selbst hinterlegt sind, sondern unmittelbar gemessene Turbulenzmesswerte für die Regelung zugrunde zu legen. Der erfindungsgemäße Vorteil stellt sich dadurch ein, dass der Turbulenzmesswert, der an der weiteren Windenergieanlage erhalten wird, zwischen den Windenergieanlagen kommuniziert wird und die Nachlaufregelung der Ausgangsanlage beeinflusst. Demnach kann die Nachlaufregelung derart optimiert werden, dass die tatsächliche Situation der gegebenenfalls im Nachlauf stehenden Anlage berücksichtigt wird.

In einer bevorzugten Ausführung ist der Turbulenzmesswert für eine an einem Rotor der weiteren Windenergieanlage herrschende Turbulenz und/oder Windscherung indikativ.

Im Rahmen dieses Dokumentes wird die Turbulenz als eine zeitliche und/oder räumliche Veränderung der Windanströmung an dem Rotor beziehungsweise in der Rotorebene der Windenergieanlage verstanden. Die Turbulenz schliesst demnach beispielsweise die zeitlich Variation der Windgeschwindigkeit, aber auch eine vertikale oder horizontale Variation der Windgeschwindigkeit, beispielsweise also Windscherung, ein. Der Turbulenzmesswert ist somit als jeder geeignete Messwert zu verstehen, der geeignet ist, diese Turbulenz auszudrücken.

In einer bevorzugten Ausführung wird die weitere Windenergieanlage in Abhängigkeit von einer Azimuthstellung und/oder einer bestimmten Windrichtung ausgewählt.

Die bestimmte Windrichtung kann beispielsweise eine an der zu regelnden Windenergieanlage gemessene Windrichtung oder eine für den ganzen Windpark, beispielsweise durch einen Parkmaster, bereitgestellte Windrichtung sein. Der Vorteil gemäß dieser Ausführungsform besteht nun darin, dass nicht immer Messwerte der gleichen weiteren Windenergieanlage zur Nachlaufregelung herangezogen werden, sondern dass es möglich ist, sozusagen die geeignetste Quelle der heranzuziehenden Messwerte aus den Windenergieanlagen, die vorzugsweise in Umgebung zueinander stehen, auszuwählen. Vorzugsweise können auch Messwerte mehrerer weiterer Windenergieanlagen herangezogen werden, die beispielsweise in geeigneter Form gewichtet und/oder gemittelt werden, beispielsweise anhand deren Abstand von der zu regelnden Windenergieanlage.

In einer bevorzugten Ausführung ist die Nachlaufregelung dazu eingerichtet, wenigstens eines aus einer Azimuthstellung, einem Pitchwinkel, einem Generatormoment und einer Generatorleistung zu regeln.

Mit der Regelung der Azimuthstellung kann der Rotor der Windenergieanlage gegebenenfalls gegenüber dem eintreffenden Wind verdreht, beispielsweise um den Nachlauf der Windenergieanlage abzulenken und gegebenenfalls die Turbulenz bei im Nachlauf stehenden Anlagen zu verringern. Die Regelung des Pitchwinkels bzw. des Generatormomentes oder auch der Generatorleistung zielen auf eine Regelung der aus dem Wind entnommenen Leistung der Windenergieanlage ab, insbesondere ist eine niedrigere entnommene Leistung dazu geeignet, die Turbulenz an nachgelagerten Anlagen zu verringern.

In einer bevorzugten Ausführung ist die Nachlaufregelung dazu eingerichtet, basierend auf einer horizontalen Windscherung der weiteren Windenergieanlage zu regeln.

Eine horizontale Windscherung wird vorzugsweise als Differenz der Windgeschwindigkeit an zwei horizontal gegenüberliegenden Punkten der Rotorebene definiert. Beispielsweise eignen sich hierzu die 3-Uhr-Position des Rotors und die 9-Uhr-Position des Rotors, aber ebenso sind auch in der Nähe dieser Positionen liegende Positionen oder auch Mittelwerte über bestimmte Bereiche, beispielsweise von der 2-Uhr-Position bis zur 4-Uhr-Position mit entsprechendem Pendant auf der gegenüberliegenden Seite denkbar. Die Bereiche können natürlich auch unter Berücksichtigung des Einzelfalles in eine beliebige Richtung verschoben, größer und/oder kleiner sein.

Wird als Indikator für die Turbulenz die horizontale Windscherung herangezogen, lässt sich mit diesem Maß besonders gut nachweisen, dass eine Windenergieanlage in den Nachlauf einer weiteren Anlage eintritt. Insbesondere wird die Turbulenz der dann im Nachlauf stehenden Anlage zuerst an einer der Randbereiche der überstrichenen Rotorebene auftreten und sich von dort über den weiteren Bereich der Rotorebene ausbreiten. Ein Grund hierfür ist, dass sich Windbedingungen nicht spontan vollständig ändern, sondern die Änderungen der Windbedingungen, beispielsweise der Windrichtung, über einen bestimmten, wenn auch gegebenenfalls sehr kurzen, Zeitraum auftreten. Indem die Windenergieanlage detektiert, dass die im Wind nachgelagerte Anlage eine horizontale Windscherung misst, wenn also tatsächlich eine Nachlaufbeeinflussung vorliegt, kann die Nachlaufregelung entsprechend die Windenergieanlage regeln, um die unerwünschten Auswirkungen bei der weiteren Anlage zu reduzieren und/oder zu vermeiden.

Erfindungsgemäß ermöglicht die Verwendung der horizontalen Windscherung dadurch, dass das Vorzeichen der Windscherung angibt, ob bspw. der Wind in der 3-Uhr-Position oder in der 9-Uhr-Position stärker ist, ob sich die leeseitige Windenergieanlage von der Seite der 3-Uhr-Position oder der 9-Uhr-Position in den Nachlaufbereich der Windenergieanlage begibt. Entsprechend regelt die Nachlaufregelung auch auf ein Vorzeichen der horizontalen Windscherung.

Erfindungsgemäß ist die Nachlaufregelung dazu eingerichtet, die Windenergieanlage zu regeln, wenn der Turbulenzmesswert einen bestimmten ersten Schwellwert überschreitet.

Eine gemessene Turbulenz kann unterschiedlichste Ursachen haben. Um natürliche Ursachen, wie beispielsweise natürlich auftretenden unsteten Wind, als Regelungsursache auszuschließen, setzt die Regelung gemäß dieser vorteilhaften Ausführung erst bei Überschreitung eines bestimmten Turbulenzmesswertes ein.

Vorzugsweise ist die Nachlaufregelung dazu eingerichtet, einen Pitchwinkel zu erhöhen, sobald der Turbulenzmesswert den bestimmten ersten Schwellwert überschreitet. Auch im Hinblick auf diese Ausführung bedeutet ein Überschreiten des Schwellwertes, dass die Windenergieanlage, an der der Turbulenzmesswert gemessen wird, in den Nachlauf der stromauf stehenden Windenergieanlage eintritt. Durch die Erhöhung des Pitchwinkels wird die durch den Rotor erzeugte Verwirbelung reduziert und demnach die daraus auf der nachfolgenden Anlage resultierende Turbulenz verringert.

Erfindungsgemäß ist die Nachlaufregelung dazu eingerichtet, Änderungen der Betriebsparameter zu protokollieren und die zuletzt durchgeführte Änderung umzukehren, sobald der Turbulenzmesswert den bestimmten ersten Schwellwert überschreitet.

Die zu dieser Ausführung führende Überlegung basiert darauf, dass die letzte protokollierte Änderung der Betriebsparameter zu dem Anstieg des gemessenen Turbulenzmesswertes bei der im Nachlauf stehenden Anlage geführt hat. Indem diese Änderung, d.h. die Ursache der gemessenen Turbulenz, umgekehrt wird, verringern sich die unerwünschten Nachlaufeffekte in der stromab stehenden Windenergieanlage. Diese Ausführung ist natürlich nicht auf exakt eine protokollierte Änderung beschränkt, beispielsweise können auch die über einen bestimmten vergangenen Zeitraum, beispielsweise 10 Minuten, durchgeführten Änderungen oder sogar ein Vielfaches der vergangenen protokollierten Änderungen umgekehrt werden.

Vorzugsweise ist die Nachlaufregelung dazu eingerichtet, eine zuletzt protokollierte Änderung der Azimuthposition umzukehren.

Besonders eine Änderung der Azimuthposition, also eine Nachführung der Gondel der Windenergieanlage nach der Richtung des Windes, kann dafür sorgen, dass die von der Windenergieanlage erzeugten Verwirbelungen in Richtung der weiteren Windenergieanlage gerichtet werden und damit dazu führen, dass dort unerwünschte Nachlaufeffekte auftreten. Indem die Änderung der Azimuthposition, die zu dem Eintritt der stromab stehenden Windenergieanlage in den Nachlauf geführt hat, umgekehrt wird, wird die Gondel der Windenergieanlage unter einem Winkel zu der Windrichtung stehen, was zu einer Ablenkung der erzeugten Verwirbelungen führt. Gemäß dieser Ablenkung befindet sich die stromab stehende Anlage dann nicht mehr im Nachlaufbereich der Windenergieanlage, deren Azimuthposition verdreht ist.

In einer bevorzugten Ausführung ist die Nachlaufregelung dazu eingerichtet, die Umkehr der Änderungen fortzusetzen, so lange der Turbulenzmesswert einen bestimmten zweiten Schwellwert übersteigt.

Die Umkehr der Änderungen betrifft hier insbesondere die Richtung der Änderung, beispielsweise eine Erhöhung oder Verringerung des Pitchwinkels und/oder eine Azimuthdrehung nach links bzw. rechts. Wird beispielsweise eine Drehung der Gondel nach links als ursächlich für den Eintritt der stromab stehenden Windenergieanlage in den Nachlauf der Windenergieanlage, deren Azimuthposition nach links verändert wird, ermittelt, so erfolgt eine Drehung nach rechts so lange, bis der Turbulenzmesswert unterhalb des zweiten Schwellwertes ist. Der zweite Schwellwert ist vorzugsweise unterhalb des ersten Schwellwertes, der die Umkehrung der vorangegangenen Änderung überhaupt auslöst. In anderen Beispielen sind natürlich auch andere Werte des zweiten Schwellwertes, beispielsweise gleich dem ersten Schwellwert, möglich.

In einer bevorzugten Ausführung ist die Nachlaufregelung dazu eingerichtet, die Azimuthposition entgegen der Richtung der zuletzt protokollierten Änderung so lange zu verändern, bis der Turbulenzmesswert den bestimmten zweiten Schwellwert unterschreitet. Unterhalb des zweiten Schwellwertes kann demnach davon ausgegangen werden, dass die betreffende Windenergieanlage, an der der Messwert erfasst wird, nicht mehr im Nachlauf der Windenergieanlage, die geregelt wird, steht.

In einer bevorzugten Ausführung ist die Nachlaufregelung dazu eingerichtet, in Abhängigkeit der an der Windenergieanlage gemessenen Windgeschwindigkeit zu regeln. Insbesondere der Faktor der Änderung, beispielsweise der Anpassung des Azimuthwinkels und/oder des Pitchwinkels kann dann auf vorteilhafte Weise von der Geschwindigkeit des Windes und damit den insgesamt zu erwarteten Nachlaufeffekten abhängen. Beispielsweise werden hohe Windgeschwindigkeiten stärkere Turbulenzen bei der leeseitig angeordnten Anlage hervorrufen, so dass stärkere Korrekturen durch die Nachlaufregelung erforderlich werden.

Die Aufgabe wird gemäß einem zweiten Aspekt ferner durch eine Windenergieanlage gelöst. Die Windenergieanlage umfasst einen Turbulenzmesssensor, der dazu eingerichtet ist, einen Turbulenzmesswert zu bestimmen, wobei der Turbulenzmesswert für eine Turbulenz und/oder Windscherung an der Windenergieanlage indikativ ist. Die Windenergieanlage ist dazu eingerichtet, den Turbulenzmesswert zur Regelung der Windenergieanlage und/oder einer weiteren Windenergieanlage bereitzustellen.

Kern dieser Windenergieanlage ist demnach, dass die von dem Turbulenzmesssensor gemessenen Turbulenzmesswerte insbesondere auch für die Regelung einer weiteren Windenergieanlage, d.h. insbesondere einer in der näheren Umgebung der Windenergieanlage stehenden und gegebenenfalls Nachlaufeffekte verursachenden Anlage, bereitgestellt und verwendet werden. Dadurch wird es möglich, die tatsächlich auftretenden und gemessenen Turbulenzmesswerte zu verwenden, um den negativen Wirkungen dessen, dass sich die Anlage in dem Nachlauf der weiteren Windenergieanlage befindet, entgegenzutreten.

Die Windenergieanlage gemäß dem zweiten Aspekt kann gleichzeitig auch als eine Windenergieanlage gemäß dem ersten Aspekt bzw. einer hierzu als bevorzugt beschriebenen Ausgestaltung ausgebildet sein. Insofern kann diese Windenergieanlage dann durch die Nachlaufregelung sowohl den Nachlaufeffekten bei weiteren Windenergieanlagen entgegenwirken als auch selbst dafür sorgen, dass weiteren Windenergieanlagen die notwendigen Turbulenzmesswerte bereitgestellt werden, um eine entsprechend wirkungsvolle Nachraufregelung auszuführen.

In einer bevorzugten Ausführung ist der Turbulenzmesssensor dazu eingerichtet ist, eine horizontale Windscherung über den Rotor als Turbulenzmesswert bereitzustellen.

In einer bevorzugten Ausführung wird die horizontale Windscherung als Differenz der Windgeschwindigkeit an wenigstens einem Rotorblatt zwischen zwei horizontal unterschiedlichen Blattpositionen gemessen.

In einer bevorzugten Ausführung wird die horizontale Windscherung als Differenz der Windgeschwindigkeit in der 3 Uhr und der 9 Uhr Position bestimmt. Natürlich sind auch, wie oben ausgeführt, andere Möglichkeiten für die Bestimmung und Quantifizierung der horizontalen Windscherung möglich.

In einer bevorzugten Ausführung ist der Turbulenzmesssensor dazu eingerichtet, den Turbulenzmesswert aus auf wenigstens ein Rotorblatt zu verschiedenen Rotorpositionen wirkenden Lasten zu bestimmen. Auch andere Messprinzipien, die beispielsweise auf einer gemessenen Dehnung/Biegung des Rotorblattes anstatt gemessener Lasten beruhen, sind vorstellbar. Vorzugsweise kommen optische Messprinzipien für die Bestimmung einer Dehnung/Biegung zum Einsatz, wobei natürlich auch andere Messprinzipien eingesetzt werden können.

In einer bevorzugten Ausführung weist der Turbulenzmesssensor einen Biegungssensor auf. Vorzugsweise ist der Turbulenzmesssensor dazu eingerichtet, Blatt-Wurzel Biegemomente und/oder Torsionsmomente mit einer Auflösung von beispielsweise größer 10 Hz, insbesondere etwa 40 Hz, bereitzustellen. Natürlich sind auch andere Formen der Turbulenzmesssensoren möglich.

In einer bevorzugten Ausführung ist der Biegungssensor dazu eingerichtet, die Biegung eines Rotorblattes an wenigstens einer Position, insbesondere an mehreren Positionen über das Rotorblatt, zu bestimmen. Aus der Biegung ist es möglich, Parameter, die für die Turbulenz indikativ sind, abzuleiten.

In einer bevorzugten Ausführung ist der Turbulenzmesssensor dazu eingerichtet, ein Windfeld über die Rotorebene zu messen und die Turbulenz aus dem gemessenen Windfeld abzuleiten, insbesondere durch eine horizontale Differenz des Windfeldes abzuleiten. In einem Beispiel kann die Differenz aus zwei Extremen zu beiden Seiten des Windfeldes über die Rotorebene abgeleitet werden. In anderen Beispielen können auch Durchschnittswerte über einen größeren Bereich verwendet werden. Beispielsweise kann es sich bei den Extremen und/oder bei den flächigen Durchschnittswerten um über einen bestimmten Zeitraum gemittelte Werte handeln, um die Unsicherheiten durch Messfehler weiter zu verringern.

Die Aufgabe wird ferner erfindungsgemäß durch einen Windpark gelöst. Der Windpark umfasst wenigstens eine Windenergieanlage gemäß dem ersten Aspekt oder einer als bevorzugt beschriebenen Ausgestaltung der Windenergieanlage gemäß dem ersten Aspekt. Der Windpark umfasst ferner wenigstens eine Windenergieanlage gemäß dem zweiten Aspekt oder einer als bevorzugt beschriebenen Ausgestaltung der Windenergieanlage gemäß dem zweiten Aspekt. Besonders bevorzugt weist der Windpark eine oder mehrere Windenergieanlagen auf, die gemäß dem ersten und dem zweiten Aspekt ausgebildet sind, sich also sowohl zum Bereitstellen der Turbulenzmesswerte als auch zum Regeln basierend auf anderen Turbulenzmesswerten eignen. Vorzugsweise sind eine, mehrere oder sämtliche Anlagen des Windparks als Windenergieanlagen gemäß dem ersten Aspekt und dem zweiten Aspekt und/oder gemäß einer als bevorzugt beschriebenen Ausgestaltung eines oder beider dieser Aspekte ausgebildet.

Die Aufgabe wird erfindungsgemäß ferner durch ein Verfahren zum Regeln einer Windenergieanlage oder eines Windparks nach Anspruch 9 gelöst. Eine Nachlaufregelung regelt die Windenergieanlage abhängig von an einer weiteren Windenergieanlage verursachten Nachlaufeffekten. Die Nachlaufregelung regelt die Windenergieanlage basierend auf einem Turbulenzmesswert eines Turbulenzmesssensors der weiteren Windenergieanlage.

Vorzugsweise werden die Windenergieanlagen, die möglicherweise im Nachlauf stehen bestimmt und/oder bereits bei dem Festlegen des Parklayouts bestimmt. Aus diesen in Frage kommenden Windenergieanlagen wird bzw. werden dann die zu einer bestimmten Windrichtung gehörenden Anlagen ausgewählt. Die Bestimmung der möglicherweise geeigneten Windenergieanlagen kann aber auch erst während des Betriebs erfolgen, beispielsweise unter Verwendung einer Korrelation aus Turbulenzmesswerten, Anlagenparametern und/oder Windrichtung des Windparks. Weiteren Ausgestaltungen hierzu sind durch den Fachmann keine Grenzen gesetzt.

Weitere Vorteile und bevorzugte Ausgestaltungen werden im Folgenden mit Verweis auf die Ausführungsbeispiele der beigefügten Figuren genauer beschrieben. Hierbei zeigen:
- Fig. 1: schematisch und exemplarisch eine Windenergieanlage,
- Fig. 2: schematisch und exemplarisch einen Windpark,
- Fig. 3: schematisch und exemplarisch Verläufe einer horizontalen Windscherung als Beispiel eines Turbulenzmesswertes und
- Fig. 4: schematisch und exemplarisch Verläufe einer vertikalen Windscherung als Beispiel eines Turbulenzmesswertes.

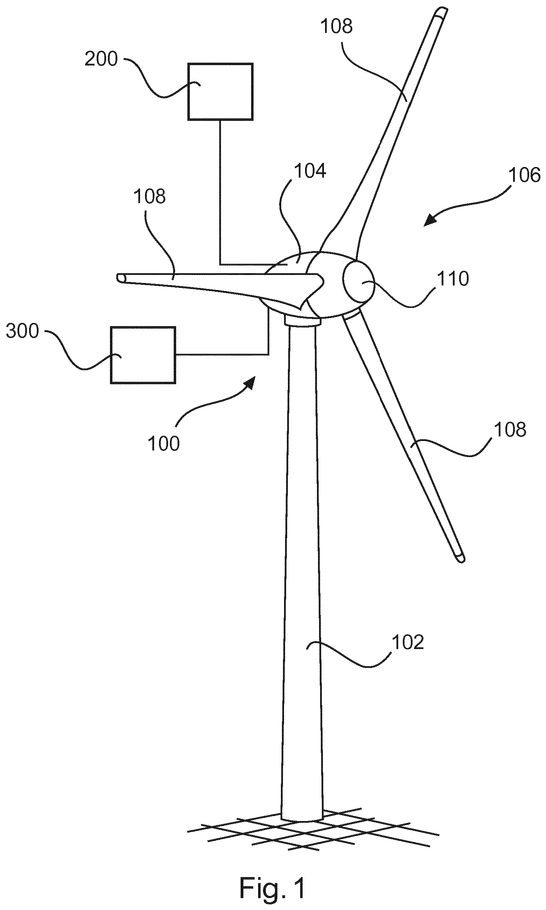

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Die Windenergieanlage 100 wird in diesem Ausführungsbeispiel von einer Nachlaufregelung 200, die Teil einer Steuerung der Windenergieanlage 100 ist, geregelt. Die Nachlaufregelung 200 ist dazu eingerichtet, einen Turbulenzmesswert, der vorzugsweise an einer anderen Windenergieanlage 100 gemessen wird, dazu zu verwenden, Betriebsparameter der Windenergieanlage 100, insbesondere eine Azimuthposition der Gondel 104, einen Pitchwinkel der Rotorblätter 108 und/oder beispielsweise ein Generatormoment derart zu verändern, dass die durch den Nachlauf der Windenergieanlage 100 erzeugten Turbulenzen bei der anderen Anlage nach Möglichkeit verringert werden.

Die Nachlaufregelung 200 wird im Allgemeinen als ein Teil der Regelung der Windenergieanlage 100 implementiert sein, die beispielsweise noch weitere Regelungen wie eine Windnachführung, oder eine Regelung zur Einhaltung der maximalen Lasten / Lärmerzeugung etc. umfassen, wie Fachleuten auf dem Gebiet zweifellos bekannt. Die erfindungsgemäße Nachlaufregelung 200 lässt sich also problemlos in bekannte Regelungen von Windenergieanlagen 100 integrieren.

Die Windenergieanlage 100 weist ferner einen Turbulenzmesssensor 300 auf, der dazu eingerichtet ist, einen Messwert bereitzustellen, der eine Variation der Windsituation an der Windenergieanlage 100 beschreibt. Beispielsweise kann der Messwert eine Turbulenzintensität, aber auch eine horizontale und/oder vertikale Windscherung umfassen. Generell sind sämtliche Messwerte vorstellbar, die dafür indikativ sind, dass sich die Windenergieanlage 100 in dem Nachlauf einer weiteren Windenergieanlage 100 befindet. Beispiele für derartige Turbulenzmesssensoren sind LIDAR Systeme, wobei vorzugsweise ein optisches Messsystem, das die Biegung der Rotorblätter an unterschiedlichen Rotorblattpositionen über die Rotordrehung erfasst, eingesetzt wird. Aus den optisch erfassten Biegungen wird dann präzise auf die an ganz unterschiedlichen Positionen der Rotorblattebene herrschenden Windbedingungen geschlossen.

Die Windenergieanlage 100 der Fig. 1 ist demnach dazu geeignet, sowohl durch die Nachlaufregelung 200 auf Nachlauf-Messsignale anderer Windenergieanlagen 100 zu reagieren und ferner, durch den Turbulenzmesssensor 300, wiederum anderen Windenergieanlagen 100 das Nachlauf-Messsignal zur gegebenenfalls vorteilhaften Anpassung des Betriebs durch eine dort vorhandene Nachlaufregelung bereitzustellen. Andere Beispiele von Windenergieanlagen 100 können auch entweder die Nachlaufregelung 200 oder den Turbulenzmesssensor 300 umfassen.

Auch wenn sie in der Zeichnung schematisch außerhalb der Windenergieanlage 100 gezeichnet sind, so werden die Nachlaufregelung 200 und der Turbulenzmesssensor 300 regelmäßig zumindest teilweise innerhalb der Windenergieanlage 100, beispielsweise innerhalb der Gondel 104, implementiert sein.

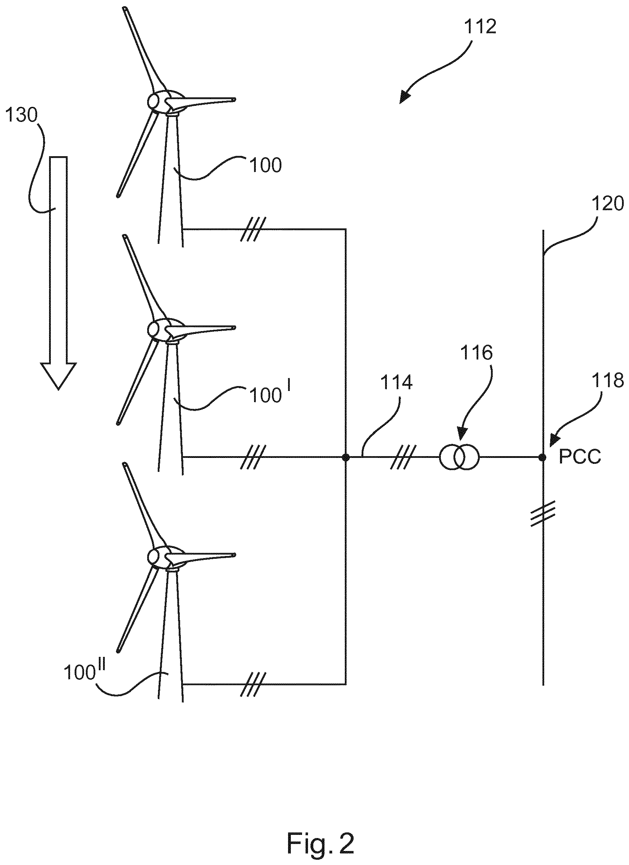

Figur 2 zeigt einen Windpark 112 mit beispielhaft drei Windenergieanlagen 100, 100', 100", die gleich oder verschieden sein können. Die drei Windenergieanlagen 100, 100', 100" stehen somit repräsentativ für im Grunde eine beliebige Anzahl von Windenergieanlagen eines Windparks 112. Die Windenergieanlagen 100, 100', 100" stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100, 100', 100" aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100, 100', 100" vorhanden ist, um nur ein anderes Ausführungsbeispiel zu nennen.

Für die vorliegende Anmeldung ist besonders vorzusehen, dass das Parknetz 114 ferner dazu eingerichtet ist, Turbulenzmesssignale von einer Windenergieanlage 100, 100', 100" zu weiteren der Windenergieanlagen 100, 100', 100" zu übermitteln. Ein an einer Windenergieanlage 100, 100', 100" von einem Turbulenzmesssensor gemessener Turbulenzmesswert wird dann zur Regelung einer weiteren der Windenergieanlagen 100, 100', 100" verwendet.

In dem Beispiel der Fig. 2 wird der Einfachheit halber angenommen, dass die in der Zeichnung vertikal dargestellte Anordnung der Windenergieanlagen 100, 100' und 100" genau einer Richtung des Windes 130 entspricht. Die Windenergieanlage 100' ist demnach exakt im Nachlauf der Windenergieanlage 100 und die Windenergieanlage 100" befindet sich exakt im Nachlauf der Windenergieanlage 100'. Bei der in diesem Beispiel vorherrschenden Windrichtung wird demnach die Windenergieanlage 100' der Windenergieanlage 100 Turbulenzmesssignale bereitstellen, so dass eine in der Windenergieanlage 100 bereitgestellte Nachlaufregelung 200 darauf reagieren kann, entsprechendes wird für die Windenergieanlagen 100" und 100' gelten.

Die Auswahl der Windenergieanlagen, die Turbulenzmesssignale, d.h. Nachlauf-Messsignale, an eine oder mehrere der anderen Windenergieanlagen bereitstellen, kann basierend auf einer einprogrammierten Auswahl, die beispielsweise in Abhängigkeit der Windrichtung getroffen wird, erfolgen. Alternativ oder zusätzlich können beispielsweise Korrelationen zwischen den Turbulenzmesssignalen und den Windenergieanlagen dazu verwendet werden, die Auswahl und Zusammenhänge derjenigen Windenergieanlagen, die Signale bereitstellen und derjenigen Windenergieanlagen, die die zugehörigen Signale empfangen und verwerten, anzupassen.

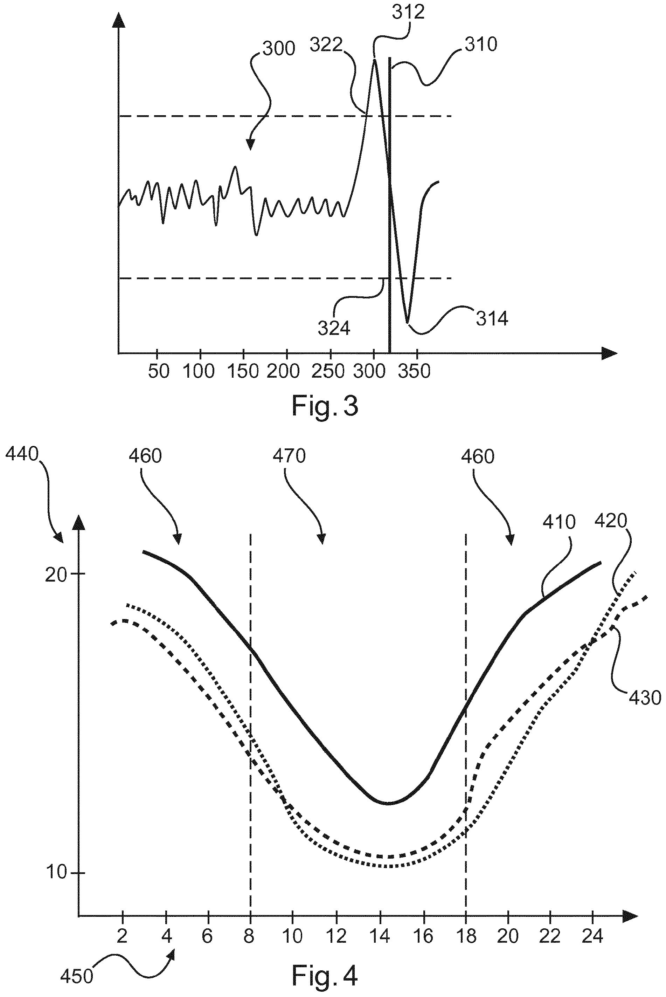

Fig. 3 zeigt schematisch und exemplarisch Verläufe einer horizontalen Windscherung 300 als Beispiel eines Turbulenzmesswertes. Auf der vertikalen Achse ist die horizontale Windscherung aufgetragen, die beispielsweise als Differenz zwischen der Windgeschwindigkeit in einer 3-Uhr-Position und einer 9-Uhr-Position des Rotors bestimmt wird. Auch andere Möglichkeiten der Bestimmung der horizontalen Windscherung sind, wie oben ausgeführt, vorstellbar.

Auf der horizontalen Achse ist in dem Beispiel der Fig. 3 die Azimuthstellung des Rotors aufgetragen, die in etwa der herrschenden Windrichtung gleichgesetzt werden kann. Bei einer Azimuthstellung 310 befindet sich die Anlage, an der die horizontale Windscherung gemessen wurde, geometrisch im Nachlauf einer weiteren Anlage. Es kann gesehen werden, dass links von der Azimuthstellung 310 ein deutlicher Anstieg mit Maximum 312 der horizontalen Windscherung auftritt. Der Anstieg auf der linken Seite zum Maximum 312 und der Abfall zur rechten Seite der Azimuthstellung 310 zum Minimum 314 hin ist genau der Einfluss des Nachlaufkorridors der weiteren Anlage. Die Skala der horizontalen Achse läuft in diesem Beispiel von 0 bis 360, was einer Volldrehung der Gondel 104 um den Turm 102 entspricht. Die Position der stromauf stehenden Anlage bei ca. 320 Grad, bei der das Zentrum des Nachlaufkorridors erreicht ist, ist natürlich nur als Beispiel zu verstehen.

Beim Eintreten in den Nachlaufkorridor wird zunächst der Unterschied der Windgeschwindigkeiten in der Horizontalen ansteigen, während dann, wenn sich die Windenergieanlage im Zentrum des Nachlaufkorridors befindet, keine nennenswerte nachlaufbedingte horizontale Windscherung erwarten lässt. Erst wenn der Nachlaufkorridor zu der anderen Seite wieder verlassen wird, ist wieder eine deutlich messbare horizontale Windscherung vorhanden und zwar mit entgegengesetztem Vorzeichen.

Zur Bestimmung, ob die horizontale Windscherung natürlichen Ursprungs oder durch Nachlaufeffekte induziert ist, bietet sich an, einen oder mehrere Schwellwerte 322, 324 zu definieren. Das Vorzeichen der Schwellwerte 322, 324 gibt an, auf welcher Seite des Rotors die Nachlaufeffekte spürbar sind, da dort mit einer reduzierten Geschwindigkeit des Windes zu rechnen ist. Die Schwellwerte 322, 324 können betragsmäßig den gleichen Wert oder unterschiedliche Werte haben. Auch können die Schwellwerte 322, 324 zeitlich veränderlich sowie absolut oder auch relativ zu dem herrschenden Wind angegeben werden.

Fig. 4 zeigt schematisch und exemplarisch Verläufe einer vertikalen Windscherung 410, 420, 430 als weiteres Beispiel eines Turbulenzmesswertes. Auf einer vertikalen Achse 440 wird die relative vertikale Windscherung exemplarisch in Prozent basierend auf dem mittleren Wert der über den Rotor gemessenen Windgeschwindigkeit aufgetragen, während auf einer horizontalen Achse 450 der Verlauf eines Tages von 0 bis 24 Stunden exemplarisch aufgetragen ist.

Es kann gesehen werden, dass es während einer Nacht 460 zu deutlich höheren relativen vertikalen Windscherungen 410, 420 und 430 kommt, als dies während des Tages 470 der Fall ist. Der Wert der vertikalen Windscherung kann ein Indiz dafür sein, inwieweit sich die Turbulenzen des Nachlaufs einer Windenergieanlage überhaupt ausbreiten können, das heißt, ob es bei der leeseitig stehenden Windenergieanlage zu Nachlaufeffekten kommt oder nicht.

Die unterschiedlichen Verläufe der vertikalen Windscherung 410, 420, 430 können beispielsweise mit unterschiedlichen Messverfahren, wie LIDAR oder auch mit Messmasten gemessen werden.

## Patentansprüche

1. Windenergieanlage (100) mit
einer Nachlaufregelung (200), die dazu eingerichtet ist, die Windenergieanlage (100) abhängig von an einer weiteren Windenergieanlage (100', 100") verursachten Nachlaufeffekten zu regeln,
**dadurch gekennzeichnet, dass**
die Nachlaufregelung (200) dazu eingerichtet ist, basierend auf einem Turbulenzmesswert eines Turbulenzmesssensors (300) der weiteren Windenergieanlage (100', 100") zu regeln wobei
die Nachlaufregelung (200) dazu eingerichtet ist, basierend auf einem Vorzeichen einer horizontalen Windscherung der weiteren Windenergieanlage (100', 100") zu regeln.

2. Windenergieanlage (100) nach Anspruch 1,
wobei der Turbulenzmesswert für eine an einem Rotor (106) der weiteren Windenergieanlage herrschende Turbulenz und/oder Windscherung indikativ ist, und/oder
wobei die weitere Windenergieanlage in Abhängigkeit von einer Azimuthstellung und/oder einer bestimmten Windrichtung ausgewählt wird, und/oder
wobei die Nachlaufregelung (200) dazu eingerichtet ist, wenigstens eines aus einer Azimuthstellung, einem Pitchwinkel, einem Generatormoment und einer Generatorleistung zu regeln.

3. Windenergieanlage (100) nach einem der vorstehenden Ansprüche,
wobei die Nachlaufregelung (200) dazu eingerichtet ist, die Windenergieanlage (100) zu regeln, wenn der Turbulenzmesswert einen bestimmten ersten Schwellwert (322, 324) überschreitet,
wobei vorzugsweise die Nachlaufregelung (200) dazu eingerichtet ist, einen Pitchwinkel zu erhöhen, sobald der Turbulenzmesswert den bestimmten ersten Schwellwert (322, 324) überschreitet.

4. Windenergieanlage (100) nach Anspruch 3, wobei
die Nachlaufregelung (200) dazu eingerichtet ist, Änderungen der Betriebsparameter zu protokollieren und die zuletzt durchgeführte Änderung umzukehren, sobald der Turbulenzmesswert den bestimmten ersten Schwellwert (322, 324) überschreitet,
wobei vorzugsweise die Nachlaufregelung (200) dazu eingerichtet ist, eine zuletzt protokollierte Änderung der Azimuthposition umzukehren.

5. Windenergieanlage (100) nach Anspruch 4, wobei
die Nachlaufregelung (200) dazu eingerichtet ist, die Umkehr der Änderungen fortzusetzen, so lange der Turbulenzmesswert einen bestimmten zweiten Schwellwert übersteigt.

6. Windenergieanlage (100) nach Anspruch 5, wobei
die Nachlaufregelung (200) dazu eingerichtet ist, die Azimuthposition entgegen der Richtung der zuletzt protokollierten Änderung so lange zu verändern, bis der Turbulenzmesswert den bestimmten zweiten Schwellwert unterschreitet.

7. Windenergieanlage (100) nach einem der vorstehenden Ansprüche, wobei
die Nachlaufregelung (200) dazu eingerichtet ist, in Abhängigkeit der an der Windenergieanlage (100) gemessenen Windgeschwindigkeit zu regeln.

8. Windpark (112) mit
- wenigstens einer Windenergieanlage (100, 100', 100") nach einem der Ansprüche 1 bis 7 und
- wenigstens einer Windenergieanlage (100, 100', 100") mit
einem Turbulenzmesssensor (300), der dazu eingerichtet ist, einen Turbulenzmesswert zu bestimmen, wobei der Turbulenzmesswert für eine Turbulenz und/oder Windscherung an der Windenergieanlage (100) indikativ ist, wobei
die Windenergieanlage (100) dazu eingerichtet ist, den Turbulenzmesswert zur Regelung der Windenergieanlage und/oder einer weiteren Windenergieanlage (100', 100") bereitzustellen.

9. Verfahren zum Regeln einer Windenergieanlage (100, 100', 100") oder eines Windparks (112) umfassend eine Windenergieanlage (100, 100', 100"), wobei
eine Nachlaufregelung (200) die Windenergieanlage (100, 100', 100") abhängig von an einer weiteren Windenergieanlage (100, 100', 100") verursachten Nachlaufeffekten regelt,
**dadurch gekennzeichnet, dass**
die Nachlaufregelung (200) die Windenergieanlage (100, 100', 100") basierend auf einem Turbulenzmesswert eines Turbulenzmesssensors (300) der weiteren Windenergieanlage (100, 100', 100") regelt,
die Nachlaufregelung (200) dazu eingerichtet ist, basierend auf einem Vorzeichen einer horizontalen Windscherung der weiteren Windenergieanlage (100', 100") zu regeln.

## Claims

1. A wind turbine (100) having
a wake control system (200) that is configured so as to control the wind turbine (100) on the basis of wake effects caused at a further wind turbine (100', 100"),
**characterized in that**
the wake control system (200) is configured so as to achieve control based on a turbulence measured value from a turbulence measurement sensor (300) of the further wind turbine (100', 100"), wherein
the wake control system (200) is configured so as to achieve control based on a sign of a horizontal wind shear of the further wind turbine (100', 100").

2. The wind turbine (100) as claimed in claim 1, wherein
the turbulence measured value is indicative of a turbulence and/or wind shear prevailing at a rotor (106) of the further wind turbine, and/or
the further wind turbine is selected on the basis of an azimuth position and/or a determined wind direction, and/or
the wake control system (200) is configured so as to control at least one of an azimuth position, a pitch angle, a generator torque and a generator power.

3. The wind turbine (100) as claimed in one of the preceding claims, wherein
the wake control system (200) is configured so as to control the wind turbine (100) when the turbulence measured value exceeds a determined first threshold value (322, 324), wherein
the wake control system (200) is preferably configured so as to increase a pitch angle as soon as the turbulence measured value exceeds the determined first threshold value (322, 324).

4. The wind turbine (100) as claimed in claim 3, wherein
the wake control system (200) is configured so as to record changes in the operating parameters and to reverse the last performed change as soon as the turbulence measured value exceeds the determined first threshold value (322, 324),
wherein
the wake control system (200) is preferably configured so as to reverse a last recorded change in the azimuth position.

5. The wind turbine (100) as claimed in claim 4, wherein
the wake control system (200) is configured so as to continue the reversal of the changes for as long as the turbulence measured value exceeds a determined second threshold value.

6. The wind turbine (100) as claimed in claim 5, wherein
the wake control system (200) is configured so as to change the azimuth position counter to the direction of the last recorded change until the turbulence measured value falls below the determined second threshold value.

7. The wind turbine (100) as claimed in one of the preceding claims, wherein
the wake control system (200) is configured so as to achieve control on the basis of the wind speed measured at the wind turbine (100).

8. A wind farm (112) having
- at least one wind turbine (100, 100', 100") as claimed in one of claims 1 to 7 and
- at least one wind turbine (100, 100', 100") having
a turbulence measurement sensor (300) that is configured so as to determine a turbulence measured value, wherein the turbulence measured value is indicative of a turbulence and/or wind shear at the wind turbine (100), wherein
the wind turbine (100) is configured so as to provide the turbulence measured value in order to control the wind turbine and/or a further wind turbine (100', 100").

9. A method for controlling a wind turbine (100, 100', 100") or a wind farm (112) comprising a wind turbine (100, 100', 100"), wherein
a wake control system (200) controls the wind turbine (100, 100', 100") on the basis of wake effects caused at a further wind turbine (100, 100', 100"),
**characterized in that**
the wake control system (200) controls the wind turbine (100, 100', 100") based on a turbulence measured value from a turbulence measurement sensor (300) of the further wind turbine (100, 100', 100")
the wake control system (200) is configured so as to achieve control based on a sign of a horizontal wind shear of the further wind turbine (100', 100").

## Revendications

1. Éolienne (100) avec
une régulation de sillage (200) qui est configurée pour réguler l'éolienne (100) en fonction d'effets de sillage provoqués sur une autre éolienne (100', 100"),
**caractérisée en ce que**
la régulation de sillage (200) est configurée pour effectuer une régulation sur la base d'une valeur de mesure de turbulence d'un capteur de mesure de turbulence (300) de l'autre éolienne (100', 100"), dans laquelle
la régulation de sillage (200) est configurée pour effectuer une régulation sur la base d'un signe avant-coureur de cisaillement horizontal du vent de l'autre éolienne (100', 100").

2. Eolienne (100) selon la revendication 1,
dans laquelle la valeur de mesure de turbulence est indicative d'une turbulence et/ou d'un cisaillement du vent prédominant sur un rotor (106) de l'autre éolienne, et/ou
dans laquelle l'autre éolienne est sélectionnée en fonction d'une position azimutale et/ou d'une direction du vent déterminée, et/ou
dans laquelle la régulation de sillage (200) est configurée pour réguler au moins l'un parmi une position azimutale, un angle de calage, un couple de générateur et une puissance de générateur.

3. Éolienne (100) selon l'une quelconque des revendications précédentes,
dans laquelle la régulation de sillage (200) est configurée pour réguler l'éolienne (100) lorsque la valeur de mesure de turbulence dépasse une première valeur seuil (322, 324) déterminée,
dans laquelle de préférence la régulation de sillage (200) est configurée pour augmenter un angle de calage dès que la valeur de mesure de turbulence dépasse la première valeur seuil (322, 324) déterminée.

4. Éolienne (100) selon la revendication 3, dans laquelle
la régulation de sillage (200) est configurée pour enregistrer des modifications des paramètres de fonctionnement et inverser la dernière modification effectuée dès que la valeur de mesure de turbulence dépasse la première valeur seuil (322, 324) déterminée,
dans laquelle de préférence la régulation de sillage (200) est configurée pour inverser une dernière modification enregistrée de la position azimutale.

5. Éolienne (100) selon la revendication 4, dans laquelle
la régulation de sillage (200) est configurée pour poursuivre l'inversion des modifications tant que la valeur de mesure de turbulence dépasse une seconde valeur seuil déterminée.

6. Éolienne (100) selon la revendication 5, dans laquelle
la régulation de sillage (200) est configurée pour modifier la position azimutale dans la direction opposée à la dernière modification enregistrée jusqu'à ce que la valeur de mesure de turbulence passe au-dessous de la seconde valeur seuil déterminée.

7. Éolienne (100) selon l'une quelconque des revendications précédentes, dans laquelle
la régulation de sillage (200) est configurée pour effectuer une régulation en fonction de la vitesse du vent mesurée sur l'éolienne (100).

8. Parc éolien (112) avec
- au moins une éolienne (100, 100', 100") selon l'une quelconque des revendications 1 à 7 et
- au moins une éolienne (100, 100', 100") avec
un capteur de mesure de turbulence (300) qui est configuré pour déterminer une valeur de mesure de turbulence, dans lequel la valeur de mesure de turbulence est indicative d'une turbulence et/ou d'un cisaillement du vent sur l'éolienne (100), dans lequel
l'éolienne (100) est configurée pour fournir la valeur de mesure de turbulence pour la régulation de l'éolienne et/ou d'une autre éolienne (100', 100").

9. Procédé de régulation d'une éolienne (100, 100', 100") ou d'un parc éolien (112) comprenant une éolienne (100, 100', 100"), dans lequel
une régulation de sillage (200) régule l'éolienne (100, 100', 100") en fonction d'effets de sillage causés sur une autre éolienne (100, 100', 100"),
**caractérisé en ce que**
la régulation de sillage (200) régule l'éolienne (100, 100', 100") sur la base d'une valeur de mesure de turbulence d'un capteur de mesure de turbulence (300) de l'autre éolienne (100, 100', 100"),
la régulation de sillage (200) est configurée pour effectuer une régulation sur la base d'un signe avant-coureur de cisaillement horizontal du vent de l'autre éolienne (100', 100").
